Europäisches Patentamt

European Patent Office

Office européen des brevets

(11) Publication number: **0 351 250**
A2

# EUROPEAN PATENT APPLICATION

(21) Application number: **89307204.1**

(22) Date of filing: **13.07.89**

(51) Int. Cl.⁵: **G 11 B 5/64**
**G 11 B 11/10**

(30) Priority: **13.07.88 JP 174545/88**

(43) Date of publication of application:
**17.01.90 Bulletin 90/03**

(84) Designated Contracting States: **DE FR GB**

(71) Applicant: **Matsushita Electric Industrial Co., Ltd.**
**1006, Oaza Kadoma**
**Kadoma-shi Osaka-fu, 571 (JP)**

(72) Inventor: **Kojima, Rie**
**99-6, Yamanobou-cho**
**Kashihara-shi Nara-ken (JP)**

**Kashihara, Toshiaki**
**1-31-8, Higashi Nakaburi**
**Hirakata-shi Osaka (JP)**

**Furukawa , Mieko**
**6-1-408, Myokenzaka**
**Katano-shi Osaka (JP)**

(74) Representative: **Myerscough, Philip Boyd et al**
**J.A.Kemp & Co. 14, South Square Gray's Inn**
**London, WC1R 5EU (GB)**

(54) **Magneto-optic recording medium comprising Dy-Fe-Co-based alloys.**

(57) A magneto-optic recording medium (M) is provided which comprises in order, a substrate (1), a first protective layer (2), a recording layer (3) and a second protective layer (4) on or above the recording layer (3). The recording layer (3) is made of a composition of the formula $(DY_xFe_{100-x-y}Co_y)_{100-z}M_z$, wherein 20 atomic % $\leq$ x $\leq$ 35 atomic %, 5 atomic % $\leq$ y $\leq$ 20 atomic %, 0 atomic % < z $\leq$ 10 atomic % and M represents at least one element selected from Ti, Cr, Ni, Pt, Al, Pd, W and Mo. A reflection layer may be provided between the recording layer (3) and the second protective layer (4) or over the second protective layer (4).

*FIG. 1*

EP 0 351 250 A2

**Description**

# MAGNETO-OPTIC RECORDING MEDIUM COMPRISING Dy-Fe-Co-BASED ALLOYS

## BACKGROUND OF THE INVENTION

### Field of the Invention

This invention relates to magneto-optic recording mediums wherein information is magneto-optically recorded, reproduced and erased.

Description of the Prior Art

Fundamental techniques of magneto-optic recording has been described by Yuji TOGAMI "MAGNETO-OPTIC DISK STORAGE", IEEE TRANSACTIONS ON MAGNETICS, Vol. MAG-18, No. 6, November 1982, pages 1233-1237 and by Tatsuo NOMURA, "MAGNETO-OPTICAL DISK MEMORY: PRINCIPLE AND APPLICATIONS", NHK TECHNICAL RESEARCH LABORATORY MONTHLY REPORTS, April 1986, pages 146-153.

For the magneto-optic recording, usual practice is to use polycrystalline films of materials such as MnBi, MnCuBi, CoP, EuO and the like, single crystal films of materials such as GdIG, and amorphous films of materials such as GdTbFe, TbFeCo, GdCo, GdTbFeCo and the like.

Of these films, the amorphous films are considered as a good material for magneto-optic recording medium for the following reasons. The amorphous film is suitable for very high packing density recording since they have strong vertical magnetic anisotropy. Writing is possible using a very small laser power level of several to 10 mW. A film of a large area can be made within a relatively short time. Since the film is amorphous in nature and is substantially free of any grain boundary, a smooth surface film can be obtained. Signals having a good S/N ratio free of medium noises can be read out.

At present, great attention has been directed to TbFe materials having high coercive force. These materials have now been in practical applications.

In this connection, however, Tb which is used as a rare earth element in these materials is a very scarce substance and thus expensive. In addition, because of the small production amount of Tb, a difficulty is involved in mass-producing the magneto-optic recording medium using such a rare element.

Moreover, since Tb is brittle, fabrication of an alloy target for evaporation of the recording film containing Tb is limited inevitably to the sintering process. Comparison with a process of fabricating a target by melting reveals that the production costs become significantly higher.

In addition, for recording information at a high speed transmission rate, it is necessary that a recording medium have a material exhibiting a low curie temperature and be writeable at low laser power. The TbFe materials have a high curie temperature, making it difficult to attain a great high-speed transmission rate.

Where information is overwritten according to a magnetic modulation, use of a recording medium which can be written or erased with a small external magnetic field is advantageous. With TbFe materials, an external magnetic field required for the recording and erasure is significantly high. This disenables one to use the materials for overwriting with magnetic modulation.

Another disadvantage of the known amorphous thin films of rare earth element/transition metal alloys resides in that the alloys are very susceptible to oxidation, which leads to deterioration of various characteristics necessary for the magnetic recording medium.

Japanese Laid-open Patent Application No. 58-73746 describes a magneto-optic recording medium which makes use of a recording layer made of DyFeCo where Dy is dysprosium. This alloy has the advantages that Dy is inexpensive, recording at low laser power is possible and recording/erasing at a low magnetic field is possible, but there is the disadvantage that the corrosion resistance is poor. This leads to the problem with respect to the life and reliability of the medium.

## SUMMARY OF THE INVENTION

It is according an object of the invention to provide a magneto-optic recording medium which overcomes the problems involved in the prior art mediums.

It is another object of the invention to provide a magneto-optic recording medium which can be fabricated at low costs with a low curie temperature.

It is a further object of the invention to provide a magneto-optic recording medium wherein information can be recorded at low laser power and can be recorded or erased at low magnetic field and which makes use of a corrosion-resistant material as a recording layer.

The above objects can be achieved, according to the invention, by a magneto-optic recording medium which comprises a substrate, a first protective layer formed on at least one side of the substrate, an amorphous thin film of a rare earth element/transition metal alloy having an axis of easy magnetization vertical to the film plane and formed on the first protective layer, and a second protective layer formed on the amorphous thin film. The alloy has a composition of the formula, $(Dy_xFe_{100-x-y}Co_y)_{100-z}M_z$, wherein 20 atomic % $\leq$ x $\leq$ 35 atomic %, 5 atomic % $\leq$ y $\leq$ 20 atomic %, 0 atomic % < z $\leq$ 10 atomic % and M represents at least one element selected from the group consisting of Ti, Cr, Ni, Pt, Al, Pd, W and Mo. Preferably, the second protective film is made of AlON.

## BRIEF DESCRIPTION OF THE DRAWINGS

Fig. 1 is a schematic sectional view of a magneto-optic recording medium according to one embodiment of the invention;

Fig. 2 is a graphical representation of the coercive force of a recording medium using a Dy alloy in relation to the concentration of Dy in the alloy;

Fig. 3 is a graphical representation of the curie temperature in relation to the concentration of Co in the alloy;

Fig. 4 is a graphical representation of the C/N ratio in relation to the variation in recording power;

Fig. 5 is a graphical representation of the optimum recording power in relation to the variation in linear velocity;

Fig. 6 is a graphical representation of the C/N ratio in relation to the variation in recording magnetic field;

Fig. 7 is a graphical representation of the variation in defect error rate (DER) in relation to the variation in time in an environmental test for two types of recording mediums using DyFeCo for comparison and DyFeCoTi according to the invention;

Fig. 8 is a graphical representation of the variation in defect error rate (DER) in relation to the variation in time in an environmental test for different mediums using AlN and AlON as the second protective layer; and

Figs. 9a and 9b are, respectively, schematic sectional views of magneto-optic recording mediums according to further embodiments of the invention.

## DETAILED DESCRIPTION AND EMBODIMENTS OF THE INVENTION

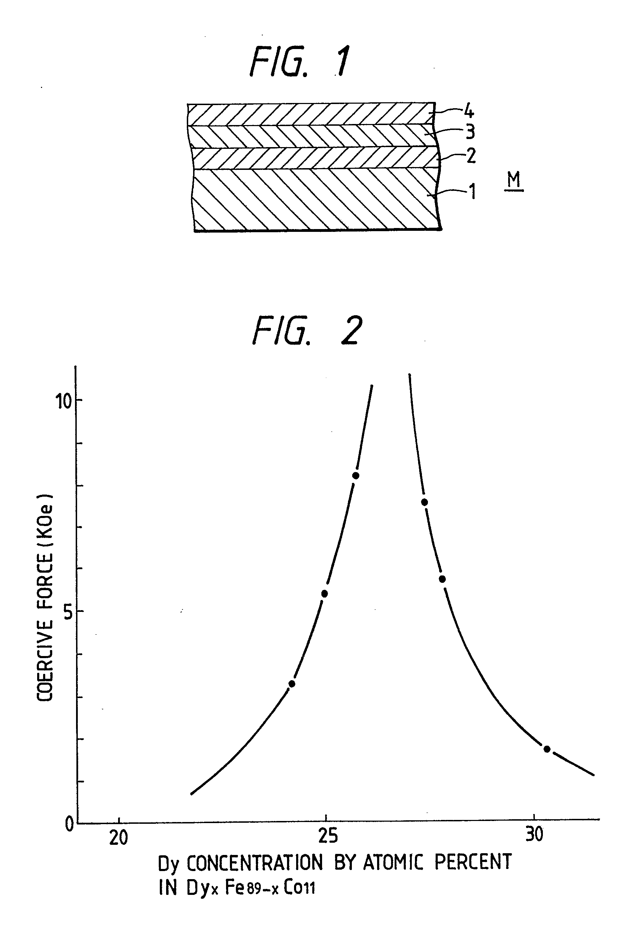

Reference is now made to the accompanying drawings, wherein like reference numerals indicate like members or parts, and particularly to Fig. 1. In the figure, there is generally indicated a magnetic recording medium M which includes a substrate 1, a first protective layer 2 formed on one side of the substrate 1, and a recording layer 3 formed on the first protective layer 2. A second protective layer 4 is further formed on the recording layer 3. If required, the substrate 1 may be formed with the layers 2, 3 and 4 at opposite sides.

The substrate 1 may be made of any materials used ordinarily for these purposes and include, for example, glass and plastic resins such as polycarbonate, amorphous polyolefins, polymethyl methacrylate and the like. The first protective layer may be formed, for example, by any known techniques using ZnS, AlN or AlON and is usually in the thickness of from 500 to 1500 angstroms. The recording layer 3 is made of a DyFeCoM alloy wherein M is at least one element selected from Ti, Cr, Ni, Pt, Al, Pd, W and Mo and is formed by sputtering techniques including, for example, DC magnetron sputtering in a thickness of from 100 to 2000 angstroms. The second protective layer is formed similar to the first protective layer and is made of AlN, AlON, $SiO_2$, ZnS, SiN or the like, of which AlON is preferred for the reason discussed hereinafter. The thickness of the second protective layer is preferably in the range of from 100 to 3000 angstroms.

For the formation of the recording layer 3, a composite target of Fe which is disposed with 1 cm square chips or pieces of Dy, Co and M are used and subjected to sputtering under conditions known in the art. It has been experimentally confirmed through the Kerr hysteresis loop that the recording thin film 3 formed in this manner has an axis of easy magnetization in a direction vertical to the film plane. The magneto-optic characteristics of the recording film are mainly dependent on Dy, Fe and Co and the corrosion resistance depends mainly upon the additive element, M which has been defined before. The compositional relationships of Dy, Fe and Co are determined using DyFeCo alloys.

In Fig. 2, there is shown the relation between the composition of a DyFeCo thin film and the coercive force wherein the number of the Dy chips or pieces placed on the target is changed and the concentration of Co is maintained constant at 11 atomic percent.

From the figure, it will be seen that for the axis of easy magnetization which is vertical to the film plane, the concentration of Dy should be from 20 to 35 atomic percent. The compensation concentration is near about 26.5 atomic percent with respect to the concentration of Dy. From this, good recording and reproducing characteristics can be obtained when the concentration of Dy is in the range of from 25 to 28 atomic percent.

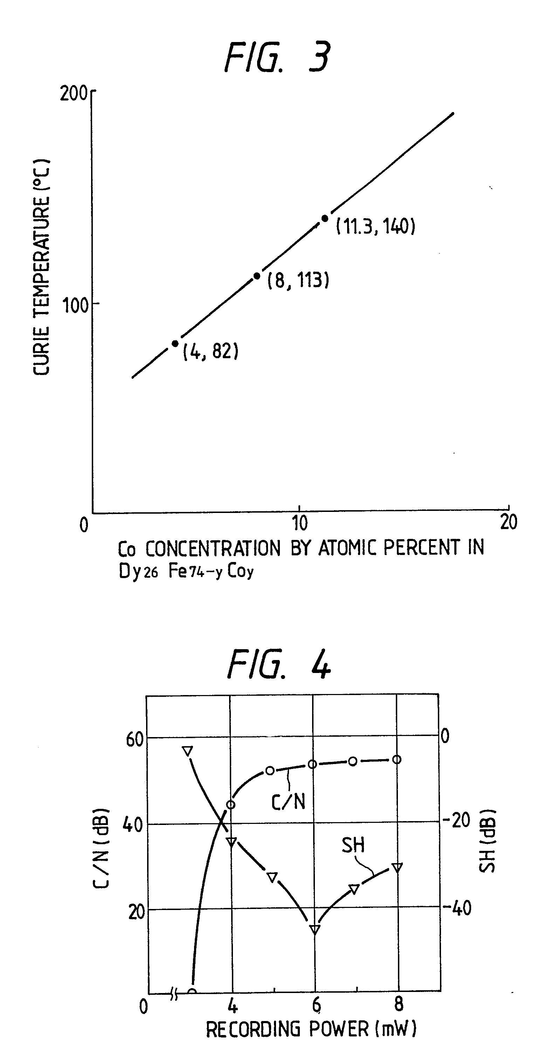

Fig. 3 shows the relation between the curie temperature and the concentration of Co in $Dy_{26}Fe_{74-y}Co_y$. As will be apparent from this figure, when Dy is used, the thin film exhibits a very low curie temperature.

In general, when the curie temperature of the recording layer 3 is too low, the power necessary for writing becomes small. However, the recorded signals are liable to thermally deteriorate by means of reading power. The curie temperature of the recording layer 3 should preferably be 100°C or over. Accordingly, the concentration of Co in the recording layer 3 should be from 5 to 20 atomic percent, preferably from 7 to 16 atomic percent.

In view of the above results, the concentration of Fe should preferably from 45 to 75 atomic percent.

In Fig. 4, there is shown the relation between the C/N ratio and the recording power of the recording layer 3 made of $Dy_{26}Fe_{63}Co_{11}$. The recording conditions include a recording position of r = 55 mm, the number of rotations of 1800 r.p.m. and a frequency of recording signal of 5 MHz. The linear velocity is 10.3 m/second. When recording powder is 6 mW for recording 1 μm bit, a good C/N characteristic is obtained, i.e. C/N = 54 dB. Moreover, secondary harmonic waves SH contained in reproduced signals are significantly small.

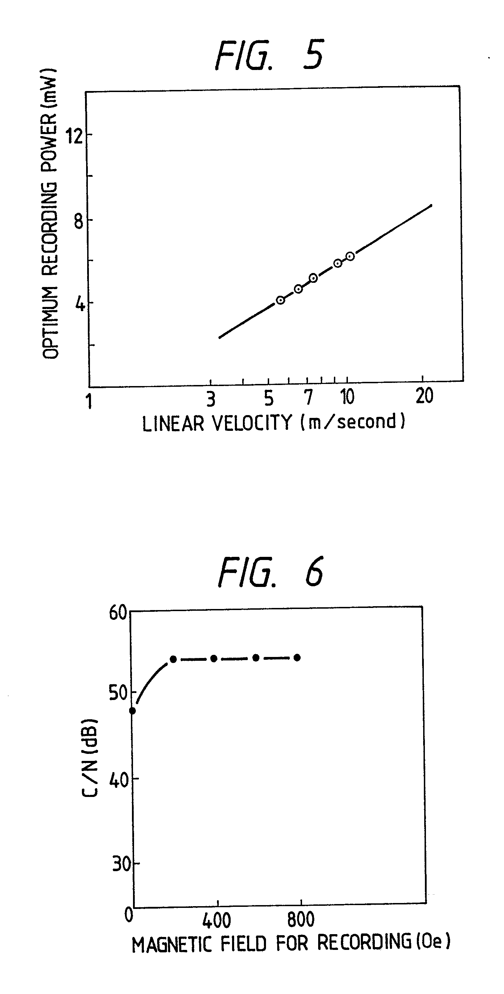

Fig. 5 shows the relation between the linear velocity and the optimum recording power for a medium using a recording layer of $Dy_{26}Fe_{63}Co_{11}$. Good results are obtained: when the linear velocity is 5.6 m/second, the optimum power is 4 mW; and when the linear velocity is 10.3 m/second or 20 m/second, the optimum power is 6 mW or about 8 mW, respectively. Because of the high sensitivity, the medium is suitable for high-speed transmission rate.

Fig. 6 shows the relation of the C/N ratio and the recording magnetic field for a medium using a recording layer of $Dy_{26}Fe_{63}Co_{11}$. The results in the figure reveal that the C/N value is saturated at a recording magnetic field of 200 Oe and that when the recording magnetic field is raised up to 800 Oe, the C/N value is not lowered but is stable. Since an external magnetic field required for the recording is small, the magnet of a recording apparatus can be made small in size. In addition, the medium is suitable for use in overwriting with magnetic modulation.

In order to improve the corrosion resistance of the amorphous thin film of the rare earth element/transition metal alloy, at least one metal selected from Ti, Cr, Ni, Pt, Al, Pd, W and Mo should be added to the DyFeCo alloy in the practice of the invention. This alloy is represented by the formula, $(Dy_xFe_{100-x-y}Co_y)_{100-z}M_z$, wherein 20 atomic % $\leqq$ x $\leqq$ 35 atomic %, 5 atomic % $\leqq$ y $\leqq$ 20 atomic %, 0 atomic % $< z \leqq$ 10 atomic % and M represents at least one element selected from the group consisting of Ti, Cr, Ni, Pt, Al, Pd, W and Mo.

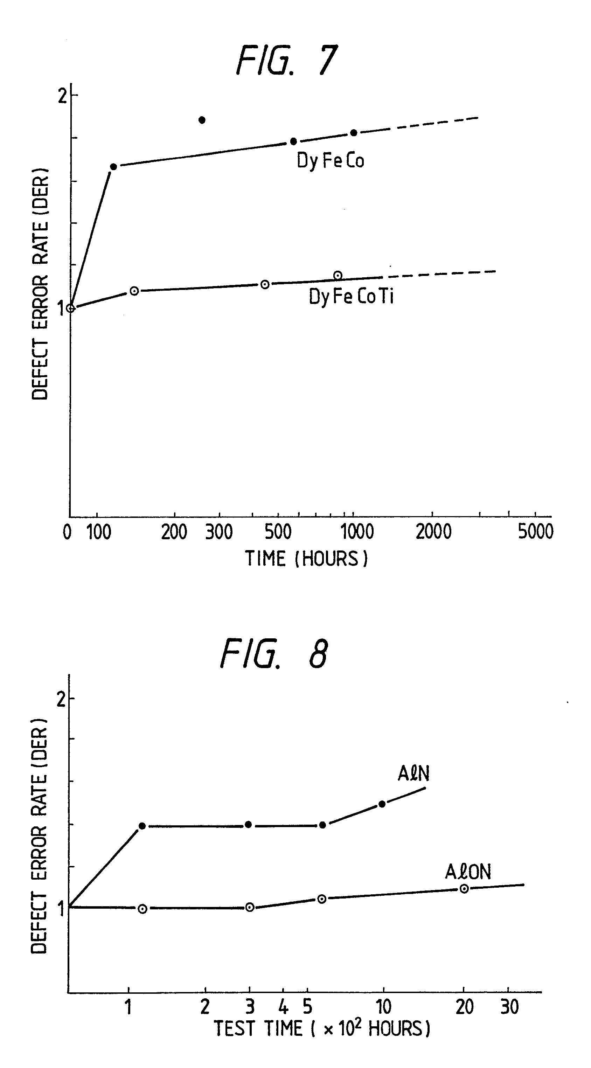

The improvement in the corrosion resistance by the addition of the metal, M, has been confirmed experimentally. For comparison, two types of recording mediums are fabricated using a $Dy_{26}Fe_{63}Co_{11}$ alloy and a $(Dy_{26}Fe_{63}Co_{11})_{98}Ti_2$ alloy used as a recording layer with a thickness of 850 angstroms, ZNS as a first protective layer and AlON as a second protective layer as shown in Fig. 1. The resultant mediums are subjected to an environmental test under conditions of 80°C and 80% R.H. The results are shown in Fig. 7 which shows the relation between the defect error rate (DER) and the testing time. In the figure, the initial value prior to the test is taken as 1. With the DyFeCo thin film, the DER value increases to about 1.7 times the initial value after about 120 hours. When Ti is added in an amount of 2 atomic percent, the DER value is kept as low as about 1.4 times the initial value after 1000 hours. Thus, the medium of the invention is better in the corrosion resistance than the ternary alloy film. In the above experiment, Ti is used, and similar results are obtained when using Cr, Ni, Pt, Al, Pd, W, Mo and mixtures thereof. These elements have been experimentally shown to impart a good corrosion resistance to the layer. These elements are added in an amount of up to 10 atomic percent, preferably from 1 to 7 atomic percent, in order not to adversely influence magneto-optic, magnetic and electric characteristics of the DyFeCo alloys.

The corrosion resistance may be further improved when the second protective layer is made of a compound which exhibits better protective properties. More particularly, the following test has been conducted. Over the recording layer made of a $(Dy_{26}Fe_{63}Co_{11})_{98}Ti_2$ alloy used above is formed a 850 angstrom thick layer of AlON or AlN as a second protective layer. The resultant mediums are subjected to an environmental test under conditions of 80°C and 80% R.H. similar to those in Fig. 7. The results are shown in Fig. 8 wherein the variation in the DER value is shown relative to the test time and the initial value is taken as 1. The figure reveals that with the AlN protective layer, the DER value increases to about 1.5 times the initial value after 1000 hours. In the case of the AlON protective layer, the DER value rarely changes after 2000 hours. Thus, the AlON layer is excellent as the protective layer.

It will be noted that the AlON layer used above is obtained by addition of about 25 atomic percent of $O_2$ to AlN. Similar results are obtained when the amount of oxygen added to AlN is in the range of from 10 to 40 atomic percent based on the content of nitrogen in the AlN.

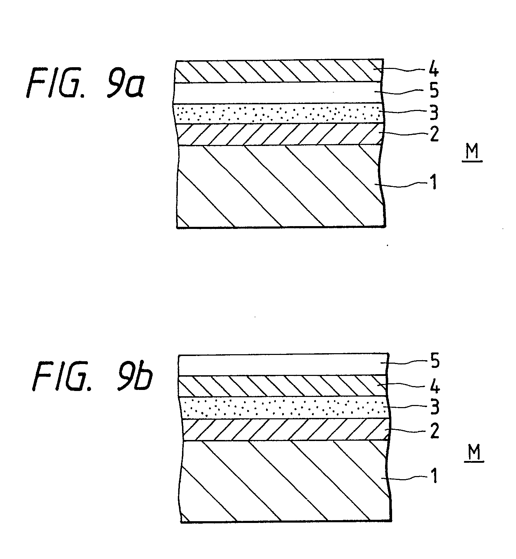

In Figs. 9a and 9b, further embodiments of the invention are shown. In Fig. 9a, a reflection layer 5 is formed between the recording layer 3 and the second protective layer 4. In Fig. 9b, the reflection layer 5 is formed on the second protective layer 4. The reflection layer 5 is made of a metal selected from Al, Ni, Cr and Ti or alloys thereof. Specific and preferable examples of the alloy for the layer 5 include Al, AlTi, AlCr and the like.

## Claims

1. A magneto-optic recording medium which comprises a substrate, a first protective layer formed on at least one side of the substrate, an amorphous thin film of a rare earth element/transition metal alloy having an axis of easy magnetization vertical to the film plane and formed on the first protective layer, and a second protective layer formed on or above the amorphous thin film, said alloy having a composition of the formula, $(DY_xFe_{100-x-y}Co_y)_{100-z}M_z$, wherein 20 atomic % $\leqq$ x $\leqq$ 35 atomic %, 5 atomic % $\leqq$ y $\leqq$ 20 atomic %, 0 atomic % $< z \leqq$ 10 atomic % and M represents at least one element selected from Ti, Cr, Ni, Pt, Al, Pd, W and Mo.

2. A recording medium according to Claim 1, wherein x is from 25 to 28 atomic percent.

3. A recording medium according to Claim 1 or 2, wherein y is from 7 to 16 atomic percent.

4. A recording medium according to Claim 1, 2 or 3, wherein the content of Fe(100-x-y) is from 45 to 75 atomic percent.

5. A recording medium according to any one of the preceding claims wherein z is from 1 to 7 atomic percent.

6. A recording medium according to any one of the preceding claims wherein M is titanium.

7. A recording medium according to any one of the preceding claims, wherein said second protective layer is made of AlON.

8. A recording medium according to Claim 7, wherein the content of oxygen is from 10 to 40 atomic percent based on the content of nitrogen in the A1ON.

9. A recording medium according to any one of the preceding claims, further comprising a reflection layer between said amorphous thin film and said second protective layer or on said second protective layer.

10. A recording medium according to Claim 9, wherein said reflection layer is made of a metal selected from Al, Ni, Cr and Ti, or an alloy of any two or more of them.

# FIG. 1

# FIG. 2

# FIG. 3

CURIE TEMPERATURE (°C)

(11.3, 140)

(8, 113)

(4, 82)

Co CONCENTRATION BY ATOMIC PERCENT IN
$Dy_{26} Fe_{74-y} Co_y$

# FIG. 4

C/N (dB)

SH (dB)

C/N

SH

RECORDING POWER (mW)

FIG. 5

FIG. 6

FIG. 7

FIG. 8

FIG. 9a

FIG. 9b